# EUROPEAN PATENT APPLICATION

(11) **EP 3 656 739 A1**
(43) Date of publication of application: **27.05.2020**
(21) Application number: 18859838.7
(22) Date of filing: 14.09.2018
(51) Int. Cl.: C01B 33/26, C08K 3/34, C08L 21/00, B60C 1/00, C08K 7/26

(54) **METHOD FOR MANUFACTURING ALUMINOSILICATE NANOPARTICLES HAVING EXCELLENT DISPERSIBILITY, RUBBER REINFORCING MEMBER COMPRISING ALUMINOSILICATE NANOPARTICLES, AND RUBBER COMPOSITION COMPRISING SAME FOR TIRE**

(30) Priority: 22.09.2017 KR 20170122815; 22.09.2017 KR 20170122816; 11.09.2018 KR 20180108345; 11.09.2018 KR 20180108346
(71) Applicant: LG Chem, Ltd., Seoul 07336 (KR)
(72) Inventor: CHOI, Kwon Il, Daejeon 34122 (KR); OH, Myounghwan, Daejeon 34122 (KR); LEE, Ha Na, Daejeon 34122 (KR); KIM, Woo Seok, Daejeon 34122 (KR); SEONG, Eun Kyu, Daejeon 34122 (KR)
(74) Representative: Hoffmann Eitle
(86) International application number: PCT/KR2018/010868
(87) International publication number: WO 2019/059594

(57) **Abstract**

The present disclosure relates to a method for preparing aluminosilicate nanoparticles having excellent dispersibility. According to the present disclosure, amorphous aluminosilicate nanoparticles can be provided by a simple method of obtaining an aluminosilicate salt by a neutralization reaction between a silicon source and an aluminum source. Particularly, according to the above method, aluminosilicate nanoparticles exhibiting improved workability and productivity in a rubber molding process while having excellent dispersibility in a rubber composition can be provided.

## Description

### [TECHNICAL FIELD]

### Cross-reference to Related Application

This application claims the benefits of Korean Patent Application No. 10-2017-0122815 filed on September 22, 2017, No. 10-2017-0122816 filed on September 22, 2017, No. 10-2018-0108345 filed on September 11, 2018, and No. 10-2018-0108346 filed on September 11, 2018 with the Korean Intellectual Property Office, the disclosures of which are incorporated herein by reference in their entirety.

The present disclosure relates to a method for preparing aluminosilicate nanoparticles having excellent dispersibility, a reinforcing material for rubber including the aluminosilicate nanoparticles, and a rubber composition for tires including the same.

### [BACKGROUND OF ART]

As concerns about global warming and environmental problems spread, environment-friendly concepts of increasing energy efficiency and reducing carbon emissions have attracted attention in various fields. These environment-friendly concepts are becoming evident in the tire industry by developing highly efficient eco-friendly tires and recycling waste tires.

Eco-friendly tires (or green tires) are tires that can reduce rolling resistance of rubber to achieve high efficiency and high fuel efficiency, resulting in a reduction in carbon emissions. Modified rubber materials and rubber reinforcing white additives (for example, precipitated silica) have been mainly used for manufacturing such eco-friendly tires.

Generally, silica materials have a problem that dispersibility in the rubber composition is low so that abrasion resistance is deteriorated. In order to compensate for this, it is known that highly dispersed precipitated silica having specific conditions can be used together with a silane coupling agent to make a material for eco-friendly tires having good abrasion resistance.

In addition, there is also high interest in additives such as the highly dispersed precipitated silica which may have good conflicting properties (mechanical strength such as rolling resistance and abrasion resistance). It is known that even when alumina, clay, kaolin, or the like is applied as the rubber reinforcing white additive, it can be used as an eco-friendly tire material by lowering rolling resistance. However, the rubber reinforcing white additive has a problem that the dispersibility decreases due to formation of a strong aggregate and the like, resulting in problems such as deterioration of mechanical strength.

### [PRIOR ART DOCUMENTS]

### [Non-Patent Document]

(Non-Patent Document 1) Kay Saalwächter, Microstructure and molecular dynamics of elastomers as studied by advanced low-resolution nuclear magnetic resonance methods, Rubber Chemistry and Technology, Vol. 85, No. 3, pp. 350-386 (2012).

### [DETAILED DESCRIPTION OF THE INVENTION]

### [Technical Problem]

The present disclosure is to provide a method for preparing aluminosilicate nanoparticles having excellent dispersibility in a rubber composition for tires.

### [Technical Solution]

According to the present disclosure, a method for preparing aluminosilicate nanoparticles is provided, wherein the method includes the steps of:
preparing a reaction solution containing an aluminosilicate salt by neutralizing an alkaline silicon source and an acidic aluminum source at a temperature of more than 70 °C and 95 °C or less so that a molar ratio (Si/Al) of silicon atoms (Si) in the silicon source to aluminum atoms (Al) in the aluminum source is 2.0 to 6.0;
washing the aluminosilicate salt to obtain aluminosilicate nanoparticles; and drying the aluminosilicate nanoparticles.

Hereinafter, the method for preparing aluminosilicate nanoparticles, the reinforcing material for rubber including the aluminosilicate nanoparticles, and the rubber composition for tires including the same according to the exemplary embodiments of the present disclosure will be described in more detail.

In this specification, the terms are used merely to refer to specific embodiments, and are not intended to restrict the present disclosure unless that is explicitly expressed.

Singular expressions of the present disclosure may include plural expressions unless differently expressed contextually.

The terms "include", "comprise", and the like of the present disclosure are used to specify certain features, regions, integers, steps, operations, elements, and/or components, and do not exclude the existence or the addition of other certain features, regions, integers, steps, operations, elements, and/or components.

According to an embodiment of the present disclosure, a method for preparing aluminosilicate nanoparticles is provided, wherein the method includes the steps of:
preparing a reaction solution containing an aluminosilicate salt by neutralizing an alkaline silicon source and an acidic aluminum source at a temperature of more than 70 °C and 95 °C or less so that a molar ratio (Si/Al) of silicon atoms (Si) in the silicon source to aluminum atoms (Al) in the aluminum source is 2.0 to 6.0;
washing the aluminosilicate salt to obtain aluminosilicate nanoparticles; and drying the aluminosilicate nanoparticles.

As a result of studies by the present inventors, it was confirmed that amorphous aluminosilicate nanoparticles can be synthesized by a simple method of obtaining an aluminosilicate salt by a neutralization reaction between an alkaline silicon source and an acidic aluminum source.

In particular, this method can provide aluminosilicate nanoparticles exhibiting excellent dispersibility and improved rubber reinforcing effect in a rubber composition by performing the neutralization reaction at a temperature of more than 70 °C and 95 °C or less so that a molar ratio (Si/Al) of silicon atoms (Si) in the silicon source to aluminum atoms (Al) in the aluminum source is 2.0 to 6.0.

The aluminosilicate nanoparticles provided by the above method can be suitably applied as a reinforcing material for rubber when added to a rubber composition for tires.

According to an embodiment of the present disclosure, a step of preparing a reaction solution containing an aluminosilicate salt is performed by neutralizing an alkaline silicon source and an acidic aluminum source at a temperature of more than 70 °C and 95 °C or less so that a molar ratio (Si/Al) of silicon atoms (Si) in the silicon source to aluminum atoms (Al) in the aluminum source is 2.0 to 6.0.

In the above method, the silicon source is an alkaline solution with a pH of more than 7.0 including a water-soluble silicone salt.

As the water-soluble silicone salt, a silicone compound capable of exhibiting alkalinity with a pH of more than 7.0 in an aqueous solution can be used without particular limitation. Preferably, the water-soluble silicone salt may be at least one compound selected from the group consisting of sodium silicate (Na₂SiO₃) and potassium silicate (K₂SiO₃).

In the above method, the aluminum source is an acidic solution with a pH of less than 7.0 including a water-soluble aluminum salt.

As the water-soluble aluminum salt, an aluminum compound capable of exhibiting acidity with a pH of less than 7.0 in an aqueous solution can be used without particular limitation.

Preferably, the water-soluble aluminum salt may be at least one compound selected from the group consisting of aluminum chloride (AlCl₃), aluminum nitrate (Al(NO₃)₃), aluminum monoacetate ((HO)₂AlCH₃CO₂), aluminum diacetate (HOAl(CH₃CO₂)₂), aluminum triacetate (Al(CH₃CO₂)₃), aluminum sulfate (Al₂(SO₄)₃), and aluminum potassium sulfate (AlK(SO₄)₂).

More preferably, the use of aluminum nitrate, aluminum potassium sulfate, or a mixture thereof as the water-soluble aluminum salt may be advantageous in that agglomeration of nanoparticles can be minimized during the recovery of the aluminosilicate nanoparticles.

The neutralization reaction is carried out by mixing the alkaline silicon source with the acidic aluminum source to obtain a reaction solution containing an aluminosilicate salt as a solid component.

In particular, it is preferable that the neutralization reaction is performed at a temperature of more than 70 °C and 95 °C or less.

Specifically, the neutralization reaction may be performed at a temperature of more than 70 °C, 75 °C or more, or 80 °C or more, and 95 °C or less, 90 °C or less, or 85 °C or less. More preferably, the reaction may be performed at a temperature of 75 °C to 90 °C.

When the temperature is too low, inorganic components including the silicon source and the aluminum source are aggregated during the neutralization reaction, so that the reaction is difficult to proceed uniformly. Accordingly, it becomes difficult to control the particle size of the aluminosilicate nanoparticles finally obtained after the neutralization reaction, and the nanoparticles are tightly aggregated to form gigantic secondary particles. As a result, nanoparticles having the desired rubber reinforcing effect cannot be obtained. Therefore, it is preferable that the neutralization reaction is performed at a temperature of more than 70 °C, or a temperature of 75 °C or more.

However, when the temperature is too high, the reaction efficiency may be lowered due to boiling of the solvent. Therefore, it is preferable that the neutralization reaction is performed at a temperature of 95 °C or less, or a temperature of 90 °C or less.

According to an embodiment of the present disclosure, the molar ratio (Si/Al) of silicon atoms (Si) in the silicon source to aluminum atoms (Al) in the aluminum source in the neutralization reaction is preferably 2.0 to 6.0.

Specifically, the molar ratio (Si/Al) may be 2.0 or more, 2.5 or more, 3.0 or more, 3.5 or more, or 4.0 or more, and 6.0 or less, 5.5 or less, 5.0 or less, or 4.5 or less.

That is, by using the silicon source and the aluminum source in the molar ratio (Si/Al) of 2.0 to 6.0, aluminosilicate nanoparticles exhibiting excellent dispersibility and improved rubber reinforcing effect in a rubber composition can be provided.

The molar ratio (Si/Al) of silicon atoms (Si) in the silicon source to aluminum atoms (Al) in the aluminum source is preferably 2.0 or more so that aluminosilicate particles having a specific surface area and wear resistance suitable for the rubber reinforcing material for tires can be produced.

However, if the silicon atoms (Si) are included in the inorganic source used in the neutralization reaction at an excessively high molar ratio, a yield of the final product, aluminosilicate nanoparticles, decreases, which causes a rise in the cost of the silicon source. Therefore, the molar ratio (Si/Al) of silicon atoms (Si) in the silicon source to aluminum atoms (Al) in the aluminum source is preferably 6.0 or less.

A mixing ratio of the silicon source and the aluminum source in the neutralization reaction may be determined in consideration of the kind of salt contained in each source, the pH of each source, and the preferable pH range of the reaction solution which is a product of the neutralization reaction.

In particular, according to an embodiment of the present disclosure, it is preferable that the reaction solution, which is a product of the neutralization reaction, has a concentration of hydrogen ions which may obtain a pH of 4.0 or more, a pH of 4.0 to a pH of 10.0, a pH of 6.0 to a pH of 10.0, or a pH of 6.0 to a pH of 8.0.

If the concentration of hydrogen ions of the reaction solution is less than which may obtain a pH of 4.0, the particle size of the aluminosilicate nanoparticles becomes difficult to control, and the size of the nanoparticles generally increases, so that the desired rubber reinforcing effect may not be achieved.

Furthermore, the pH of the reaction solution affects a pH of the aluminosilicate nanoparticles finally obtained. In addition, the pH of the aluminosilicate nanoparticles affects scorch time in a process of compounding the nanoparticles into the rubber composition.

The scorch time refers to a period of time before vulcanization of a rubber composition starts in a rubber molding process. Generally, after the vulcanization of the rubber composition starts, a flow of the rubber composition in the mold is stopped and molding such as pressing becomes difficult, so an appropriate scorch time is required for ensuring workability and productivity.

However, if the pH of the aluminosilicate nanoparticles is too low or too high, it becomes difficult to secure the appropriate scorch time in the rubber molding process. Therefore, workability and productivity of the rubber molding may be deteriorated, since adding a separate vulcanization retarder or additional processing to prevent scorching is required.

For example, if the pH of the aluminosilicate nanoparticles is too low, the scorch time during the rubber compounding may be sharply slowed, and if the pH is too high, the scorch time may be drastically accelerated.

Specifically, the pH of the nanoparticles greatly affects reactivity of the components to be mixed together in the rubber compounding process, and in particular, accelerates or decelerates the rate at which amine-type functional groups react. That is, when the pH of the nanoparticles is low, the reactivity of the amine group is lowered, and when the pH of the nanoparticles is high, the reactivity of the amine group is promoted. If the reactivity is excessively accelerated during the rubber compounding process, there is a problem in product molding, and if the reactivity is too low, productivity may be lowered.

Therefore, in order to ensure the appropriate scorch time in the rubber molding process in which the aluminosilicate nanoparticles are applied as a reinforcing material for rubber, the neutralization reaction is preferably performed so that the reaction solution containing an aluminosilicate salt has a concentration of hydrogen ions which may obtain a pH of 4.0 to a pH of 10.0.

Subsequently, a step of washing the aluminosilicate salt to obtain aluminosilicate nanoparticles is performed.

In the washing step, the solid aluminosilicate salt is recovered from the reaction solution obtained by the neutralization reaction, and dispersed in water such as distilled water or deionized water, followed by washing several times to obtain aluminosilicate nanoparticles.

The washed aluminosilicate nanoparticles may have a concentration of hydrogen ions which may obtain a pH of 6.0 to a pH of 10.0.

Subsequently, a step of drying the aluminosilicate nanoparticles is performed. The drying step may be carried out at a temperature of 20 to 150 °C for 1 to 48 hours.

If necessary, conventional steps such as pulverizing and classifying the obtained aluminosilicate nanoparticles can be further performed.

Meanwhile, the aluminosilicate nanoparticles obtained by the above-described method are amorphous particles having a composition represented by the following Chemical Formula 1, and may have a concentration of hydrogen ions which may obtain a pH of 6.0 to a pH of 10.0:

[Chemical Formula 1] [(MₓAl_{y}O_{2y})·(SiO₂)_{z}]·m(H₂O)

wherein, in Chemical Formula 1,
M is an element selected from the group consisting of Li, Na, K, Rb, Cs, Be, Fr, Ca, Zn, and Mg, or ions thereof;
x ≥ 0, y > 0, and m ≥ 0;
3.0 ≤ z/y ≤ 20.0; and
x/y < 1.2.

The aluminosilicate nanoparticles contain a metal element (M) or an ion thereof, and an alkali metal or an ion thereof, and in particular, satisfy a composition of 3.0 ≤ z/y ≤ 20.0 and x/y < 1.2.

Specifically, in Chemical Formula 1, z/y is 3.0 or more, 3.3 or more, or 3.5 or more, and 20.0 or less, 15.0 or less, 10.0 or less, or 5.0 or less, which may be advantageous for manifesting all of the properties according to the present disclosure.

Specifically, in Chemical Formula 1, x/y is 1.2 or less, or 1.0 or less, which may be advantageous for manifesting all of the properties according to the present disclosure.

The aluminosilicate nanoparticles obtained by the above method are amorphous.

In particular, the aluminosilicate nanoparticles satisfy a full width at half maximum (FWHM) in a 2θ range of 20° to 37° in a data plot obtained by X-ray diffraction (XRD) of 3° to 8.5°, thereby exhibiting excellent properties as a reinforcing material.

Preferably, the full width at half maximum (FWHM) is 3° or more, 3.5° or more, 4.0° or more, 4.5° or more, 5.0° or more, 5.5° or more, or 6.0° or more. In addition, preferably, the FWHM is 8.5° or less, 8.0° or less, 7.5° or less, or 7.0° or less.

The full width at half maximum (FWHM) is a numerical value of a peak width at half of the maximum peak intensity in the 2θ range of 20° to 37° obtained by X-ray diffraction of the aluminosilicate nanoparticles.

The unit of the full width at half maximum (FWHM) can be expressed in degrees (°) which is the unit of 2θ. Compounds having high crystallinity may have a small FWHM value.

In addition, the aluminosilicate nanoparticles are characterized in that a maximum peak intensity (Iₘₐₓ) is in a 2θ range of 24° to 31° in a data plot obtained by X-ray diffraction (XRD).

Preferably, the maximum peak intensity (Iₘₐₓ) is in a 2θ range of 24° or more, 26° or more, 27° or more, or 28° or more. In addition, preferably, the maximum peak intensity (Imax) is in a 2θ range of 31° or less, 30.5° or less, or 30° or less.

For reference, amorphous silica shows Iₘₐₓ in a 2θ range of 20° to 25° and amorphous alumina shows Iₘₐₓ in a 2θ range of 30° to 40°.

Further, the aluminosilicate nanoparticles may have a concentration of hydrogen ions which may obtain a pH of 6.0 to a pH of 10.0. Preferably, the aluminosilicate nanoparticles have a concentration of hydrogen ions which may obtain a pH of 6.0 or more, a pH of 6.5 or more, a pH of 7.0 or more, or a pH of 7.5 or more, and a pH of 10.0 or less or a pH of 9.0 or less.

For example, the pH of the aluminosilicate nanoparticles can be confirmed by dispersing the aluminosilicate nanoparticles in water such as distilled water or deionized water, and then measuring the concentration of hydrogen ions of the dispersed solution.

According to an embodiment of the present disclosure, the aluminosilicate nanoparticles may have an average primary particle diameter of 10 to 50 nm.

Specifically, the aluminosilicate nanoparticles may have an average primary particle diameter of 10 nm or more, 15 nm or more, or 20 nm or more, and 50 nm or less, 45 nm or less, 40 nm or less, or 35 nm or less.

In general, the smaller the particle diameter of the reinforcing material for rubber, the better the reinforcing effect. However, the smaller the particle diameter, the more easily the agglomeration phenomenon occurs between the particles in the rubber composition. If such agglomeration becomes severe, phase separation may occur between the reinforcing material for rubber and the rubber components, resulting in a decrease in processability of tires and a difficulty in achieving the desired reinforcing effect.

According to the embodiment of the present disclosure, the aluminosilicate nanoparticles are characterized in that a Brunauer-Emmett-Teller surface area (S_{BET}) is 145 to 350 m²/g, and an external specific surface area (S_{EXT}) is 120 to 300 m²/g according to an analysis of nitrogen adsorption/desorption.

Specifically, the S_{BET} is 145 m²/g or more, 150 m²/g or more, 155 m²/g or more, or 165 m²/g or more, and 350 m²/g or less, 300 m²/g or less, 250 m²/g or less.

Specifically, the S_{EXT} is 120 m²/g or more, 125 m²/g or more, 130 m²/g or more, or 135 m²/g or more, and 300 m²/g or less, 250 m²/g or less, or 200 m²/g or less.

In addition, a ratio of S_{EXT} to S_{BET} (S_{EXT}/S_{BET}) of the aluminosilicate nanoparticles is 0.6 to 1.0, which may be advantageous for manifesting all the properties according to the present disclosure. Specifically, the S_{EXT}/S_{BET} is 0.60 or more, 0.65 or more, 0.70 or more, 0.75 or more, or 0.80 or more, and 1.0 or less, 0.99 or less, or 0.95 or less.

It is preferable that the content of micropores in the inorganic material used as the reinforcing material for rubber is minimized. This is because the micropores act as defects and can deteriorate the physical properties of the reinforcing material for rubber.

According to the present disclosure, the aluminosilicate nanoparticles are characterized in that a volume of micropores (V_{micro}) having a pore size of less than 2 nm calculated from the S_{BET} by a t-plot method is less than 0.05 cm³/g, which can exhibit excellent mechanical properties as a reinforcing material for rubber. Specifically, the V_{micro} is 0.05 cm³/g or less, 0.025 cm³/g or less, 0.02 cm³/g or less, 0.015 cm³/g or less, 0.01 cm³/g or less, or 0.007 cm³/g or less.

Meanwhile, secondary particles, that is, agglomerates of the aluminosilicate nanoparticles, may have a particle size distribution which shows a volume average particle diameter (Dₘₑₐₙ) of 1 to 25 *µ*m, a geometric standard deviation of 1 to 20 *µ*m, and a 90 % cumulative particle diameter (D₉₀) of 1 to 50 *µ*m, when measured under distilled water using a particle size analyzer (PSA).

Specifically, the secondary particles of the aluminosilicate nanoparticles may have a volume average particle diameter (Dₘₑₐₙ) of 1 *µ*m or more, 2.5 *µ*m or more, 5 *µ*m or more, 7.5 *µ*m or more, or 10.0 *µ*m or more, and 25 *µ*m or less, 22.5 *µ*m or less, 20 *µ*m or less, or 17.5 *µ*m or less, when measured using distilled water.

Further, the secondary particles of the aluminosilicate nanoparticles may have a geometric standard deviation of 1.0 *µ*m or more, 2.5 *µ*m or more, 5.0 *µ*m or more, or 7.5 *µ*m or more, and 20 *µ*m or less, 15 *µ*m or less, or 10 *µ*m or less, when measured using distilled water.

The secondary particles of the aluminosilicate nanoparticles may have a 90 % cumulative particle diameter (D₉₀) of 1 *µ*m or more, 5 *µ*m or more, 10 *µ*m or more, 15 *µ*m or more, or 20 *µ*m or more, and 50 *µ*m or less, 40 *µ*m or less, 30 *µ*m or less, or 25 *µ*m or less, when measured using distilled water.

According to another embodiment of the present disclosure, a rubber composition for tires including the aluminosilicate nanoparticles as a reinforcing material for rubber is provided.

The aluminosilicate nanoparticles prepared by the above-described method and satisfying the above characteristics have improved workability and productivity while exhibiting an enhanced reinforcing effect due to excellent dispersibility in a rubber composition.

In particular, the aluminosilicate nanoparticles can exhibit excellent mechanical properties (for example, excellent durability, wear resistance, compressive strength, etc.) as compared with reinforcing materials for rubber not satisfying the above-mentioned physical properties, since formation of micropores in the particles is reduced.

The rubber composition for tires may include a general diene elastomer without any particular limitation.

For example, the diene elastomer may be at least one compound selected from the group consisting of a natural rubber, polybutadiene, polyisoprene, a butadiene/styrene copolymer, a butadiene/isoprene copolymer, a butadiene/acrylonitrile copolymer, an isoprene/styrene copolymer, and a butadiene/styrene/isoprene copolymer.

The rubber composition for tires may also include a coupling agent which provides chemical and/or physical bonding between the aluminosilicate nanoparticles and the diene elastomer. As the coupling agent, conventional components such as a polysiloxane-based compound may be included without particular limitation.

In addition, plasticizers, pigments, antioxidants, ozone deterioration inhibitors, vulcanization accelerators, and the like which are commonly used in the tire industry may be added to the rubber composition for tires.

### [ADVANTAGEOUS EFFECTS]

According to the present disclosure, amorphous aluminosilicate nanoparticles can be provided by a simple method of obtaining an aluminosilicate salt by a neutralization reaction between a silicon source and an aluminum source. Particularly, according to the above method, aluminosilicate nanoparticles exhibiting improved workability and productivity in a rubber molding process while having excellent dispersibility in a rubber composition can be provided.

### [BRIEF DESCRIPTION OF THE DRAWINGS]

FIG. 1 is a scanning electron microscopy (SEM) image of the aluminosilicate nanoparticles according to Example 1.
FIG. 2 is a SEM image of the aluminosilicate nanoparticles according to Example 2.
FIG. 3 is a SEM image of the aluminosilicate nanoparticles according to Example 3.
FIG. 4 is a SEM image of the aluminosilicate nanoparticles according to Example 4.
FIG. 5 is a SEM image of the aluminosilicate nanoparticles according to Example 5.
FIG. 6 is a SEM image of the aluminosilicate nanoparticles according to Example 6.
FIG. 7 is a SEM image of the aluminosilicate nanoparticles according to Example 7.
FIG. 8 is a SEM image of the aluminosilicate nanoparticles according to Example 8.
FIG. 9 is a SEM image of the aluminosilicate nanoparticles according to Comparative Example 1.
FIG. 10 is a SEM image of the aluminosilicate aggregates according to Comparative Example 2.
FIG. 11 is a SEM image of the aluminosilicate aggregates according to Comparative Example 3.

### [DETAILED DESCRIPTION OF THE EMBODIMENTS]

Hereinafter, preferred examples are provided for better understanding. However, these examples are for illustrative purposes only, and the invention is not intended to be limited by these examples.

### Example 1

A 0.005 M sodium silicate (Na₂SiO₃) aqueous solution and a 0.005 M aluminum nitrate (Al(NO₃)₃) aqueous solution were mixed at 80 °C so that a molar ratio (Si/Al) of silicon atoms (Si) to aluminum atoms (Al) was 2.0 (pH 4.0), and then neutralized by mixing at 500 rpm for 10 minutes using an overhead stirrer. A reaction solution (pH 4.0) containing an aluminosilicate salt was obtained by the neutralization reaction.

The aluminosilicate salt was added to distilled water at room temperature, and then washed by stirring and centrifugation for 12 hours.

The washed aluminosilicate salt was dried in an oven at 70 °C for 24 hours to finally obtain aluminosilicate nanoparticles (pH 5.6).

### Example 2

A 0.005 M sodium silicate (Na₂SiO₃) aqueous solution and a 0.005 M aluminum nitrate (Al(NO₃)₃) aqueous solution were mixed at 80 °C so that a molar ratio (Si/Al) of silicon atoms (Si) to aluminum atoms (Al) was 4.0 (pH 6.0), and then neutralized by mixing at 500 rpm for 10 minutes using an overhead stirrer. A reaction solution (pH 6.0) containing an aluminosilicate salt was obtained by the neutralization reaction.

The aluminosilicate salt was added to distilled water at room temperature, and then washed by stirring and centrifugation for 12 hours.

The washed aluminosilicate salt was dried in an oven at 70 °C for 24 hours to finally obtain aluminosilicate nanoparticles (pH 7.5).

### Example 3

A 0.005 M sodium silicate (Na₂SiO₃) aqueous solution and a 0.005 M aluminum nitrate (Al(NO₃)₃) aqueous solution were mixed at 80 °C so that a molar ratio (Si/Al) of silicon atoms (Si) to aluminum atoms (Al) was 4.3 (pH 6.2), and then neutralized by mixing at 500 rpm for 10 minutes using an overhead stirrer. A reaction solution (pH 6.2) containing an aluminosilicate salt was obtained by the neutralization reaction.

The aluminosilicate salt was added to distilled water at room temperature, and then washed by stirring and centrifugation for 12 hours.

The washed aluminosilicate salt was dried in an oven at 70 °C for 24 hours to finally obtain aluminosilicate nanoparticles (pH 8.0).

### Example 4

A 0.005 M sodium silicate (Na₂SiO₃) aqueous solution and a 0.005 M aluminum potassium sulfate (AlK(SO₄)₂) aqueous solution were mixed at 80 °C so that a molar ratio (Si/Al) of silicon atoms (Si) to aluminum atoms (Al) was 4.4 (pH 6.2), and then neutralized by mixing at 500 rpm for 10 minutes using an overhead stirrer. A reaction solution (pH 6.2) containing an aluminosilicate salt was obtained by the neutralization reaction.

The aluminosilicate salt was added to distilled water at room temperature, and then washed by stirring and centrifugation for 12 hours.

The washed aluminosilicate salt was dried in an oven at 70 °C for 24 hours to finally obtain aluminosilicate nanoparticles (pH 8.0).

### Example 5

A 0.005 M sodium silicate (Na₂SiO₃) aqueous solution and a 0.005 M aluminum nitrate (Al(NO₃)₃) aqueous solution were mixed at 80 °C so that a molar ratio (Si/Al) of silicon atoms (Si) to aluminum atoms (Al) was 6.0 (pH 10.0), and then neutralized by mixing at 500 rpm for 10 minutes using an overhead stirrer. A reaction solution (pH 10.0) containing an aluminosilicate salt was obtained by the neutralization reaction.

The aluminosilicate salt was added to distilled water at room temperature, and then washed by stirring and centrifugation for 12 hours.

The washed aluminosilicate salt was dried in an oven at 70 °C for 24 hours to finally obtain aluminosilicate nanoparticles (pH 10.0).

### Example 6

Aluminosilicate nanoparticles (pH 8.0) were obtained in the same manner as in Example 3, except that the neutralization reaction was carried out at 75 °C instead of 80 °C.

### Example 7

Aluminosilicate nanoparticles (pH 8.0) were obtained in the same manner as in Example 3, except that the neutralization reaction was carried out at 85 °C instead of 80 °C.

### Example 8

Aluminosilicate nanoparticles (pH 8.0) were obtained in the same manner as in Example 3, except that the neutralization reaction was carried out at 90 °C instead of 80 °C.

### Comparative Example 1

23 g of KOH (Daejung Chemicals & Metals) and 27 g of colloidal silica (Ludox HS 30 wt%; Sigma-Aldrich) were completely dissolved in 62 ml of distilled water. 15 g of metakaolin (Al₂Si₂O₇, Aldrich) was added thereto, followed by stirring at 800 rpm for 40 minutes using an overhead stirrer.

This was cured at 70 °C for 4 hours.

The cured solid product was added to distilled water at 90 °C, and then washed to about pH 7 by stirring and centrifugation for 12 hours.

The washed solid product was dispersed in distilled water to form a colloidal solution, followed by centrifugation at 1500 rpm for 5 minutes to precipitate unreacted sources. From this, a supernatant in which aluminosilicate particles were dispersed was obtained and the precipitated unreacted sources were discarded.

The supernatant in which aluminosilicate particles were dispersed was dried in an oven at 70 °C for 24 hours to finally obtain aluminosilicate nanoparticles (pH 9.0).

Comparative Example 1 is a method of synthesizing aluminosilicate by using metakaolin under an aqueous solution atmosphere of a strong base (pH 14). The synthesis process is complicated compared with the examples, and a high cost is required in forming the strong base atmosphere.

### Comparative Example 2

Aluminosilicate nanoparticles (pH 8.0) were obtained in the same manner as in Example 3, except that the neutralization reaction was carried out at 30 °C instead of 80 °C.

However, during the drying process of the washed aluminosilicate salt, the particles formed very hard and large aggregates. Therefore, in order to obtain the aluminosilicate nanoparticles, a pulverizing step was performed in which the aggregates were pulverized for 5 minutes using a mortar.

### Comparative Example 3

Aluminosilicate nanoparticles (pH 8.0) were obtained in the same manner as in Example 3, except that the neutralization reaction was carried out at 70 °C instead of 80 °C.

### Experimental Example 1

In the above examples and comparative examples, a pH of the reaction solution and the nanoparticles was measured at room temperature using a SevenGo meter (manufactured by Mettler Toledo). The pH of the nanoparticles was measured by using a solution in which 1 wt% of the nanoparticles were dispersed in distilled water as a sample (the pH of the distilled water was about 7.1).

### Experimental Example 2

X-ray fluorescence (XRF, Rigaku ZSX Primus II spectrometer, wavelength dispersive type) was used to confirm a composition of the particles according to the examples and comparative examples. The XRF measurement was performed using an Rh target and measuring the particle powder mounted on a holder having a diameter of 30 mm.

**[Table 1]**

| Composition (Chemical Formula 1) | M | x/y | z/y |
|---|---|---|---|
| Example 1 | Na | 0.06 | 3.319 |
| Example 2 | Na | 0.56 | 4.045 |
| Example 3 | Na | 0.55 | 4.045 |
| Example 4 | Na | 0.61 | 4.102 |
| Example 5 | Na | 0.88 | 4.051 |
| Example 6 | Na | 0.58 | 4.079 |
| Example 7 | Na | 0.57 | 4.033 |
| Example 8 | Na | 0.55 | 4.080 |
| Comparative Example 1 | K | 1.06 | 1.592 |
| Comparative Example 2 | Na | 0.54 | 4.005 |
| Comparative Example 3 | Na | 0.54 | 4.114 |

Referring to Table 1, it was confirmed that the aluminosilicate nanoparticles prepared by the method of Comparative Example 1 had a z/y value not satisfying the preferable range.

### Experimental Example 3

X-ray diffraction analysis for the particles according to the examples and comparative examples was carried out using an X-ray diffractometer (Bruker AXS D4-Endeavor XRD) under an applied voltage of 40 kV and an applied current of 40 mA.

The measured range of 2θ was 10° to 90°, and it was scanned at an interval of 0.05°. Herein, a variable divergence slit of 6 mm was used as a slit, and a large PMMA holder (diameter = 20 mm) was used to eliminate background noise due to the PMMA holder.

A full width at half maximum (FWHM) at a peak of about 29° which is the maximum peak in the 2θ range of 20° to 37° was calculated in the data plot obtained by X-ray diffraction (XRD).

**[Table 2]**

| | FWHM (°) | Iₘₐₓ (°) | Crystal form |
|---|---|---|---|
| Example 1 | 6.2 | 25.0 | Amorphous |
| Example 2 | 6.3 | 25.8 | Amorphous |
| Example 3 | 6.2 | 25.0 | Amorphous |
| Example 4 | 6.3 | 25.8 | Amorphous |
| Example 5 | 6.0 | 24.8 | Amorphous |
| Example 6 | 6.2 | 25.1 | Amorphous |
| Example 7 | 6.2 | 25.0 | Amorphous |
| Example 8 | 6.1 | 25.1 | Amorphous |
| Comparative Example 1 | 5.8 | 29.2 | Amorphous |
| Comparative Example 2 | 6.2 | 25.1 | Amorphous |
| Comparative Example 3 | 6.0 | 25.0 | Amorphous |

### Experimental Example 4

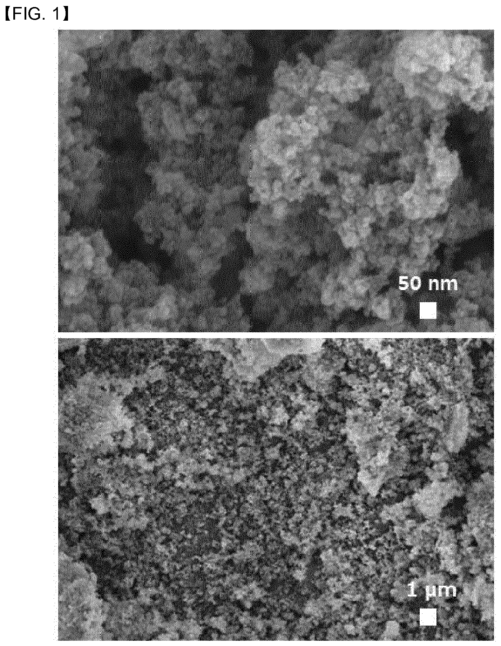

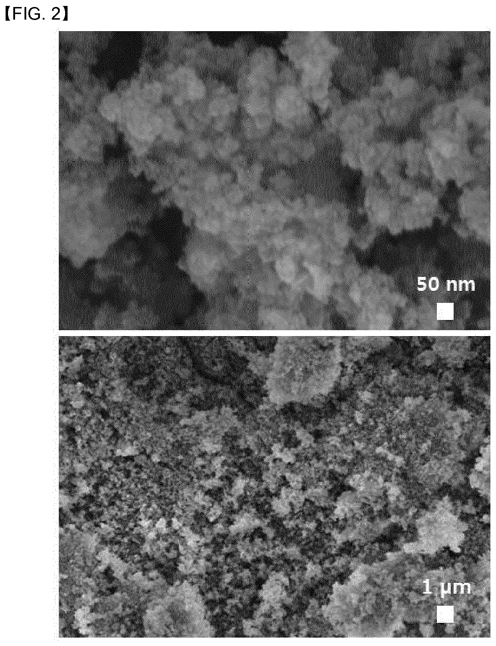

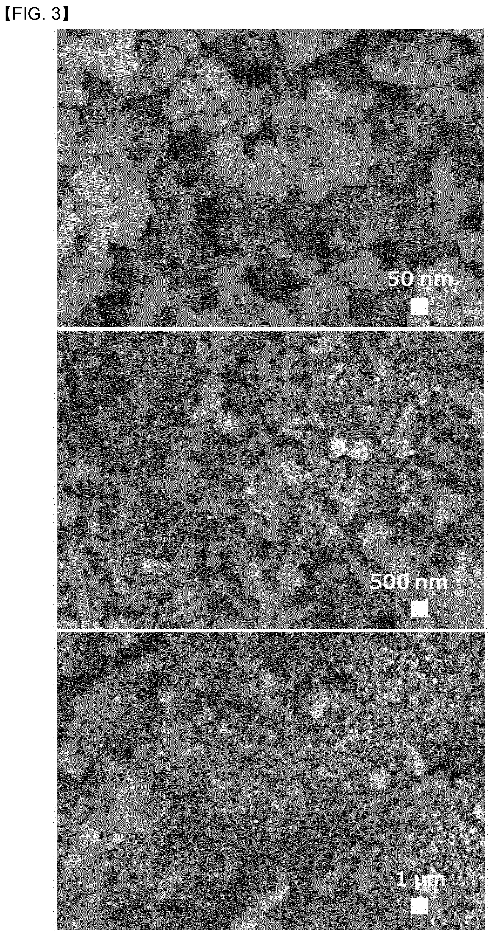

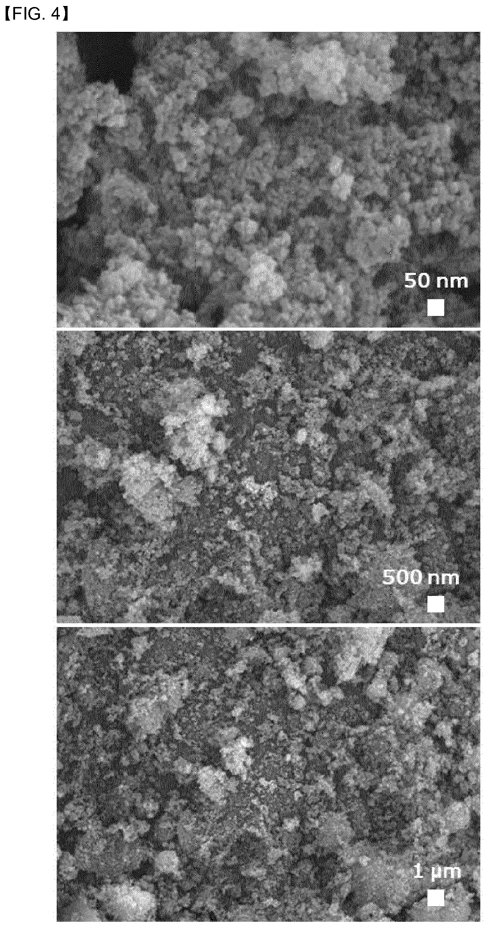

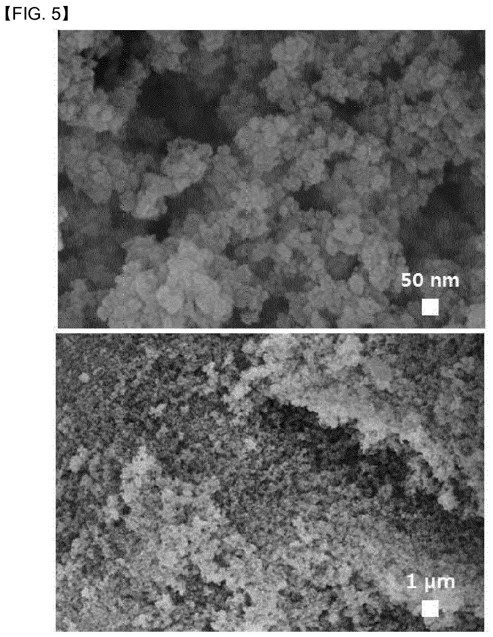

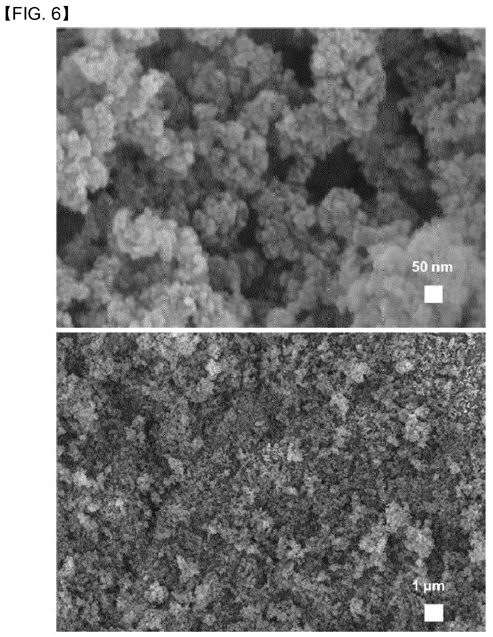

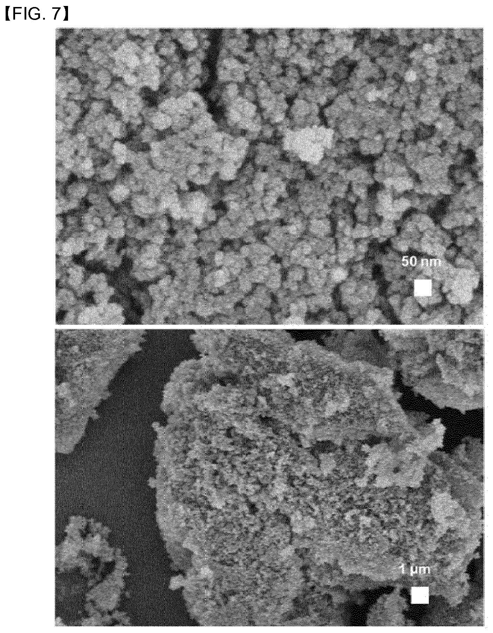

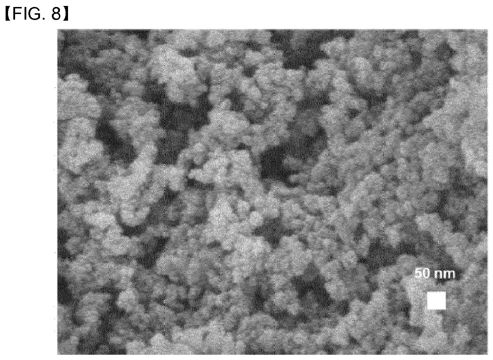

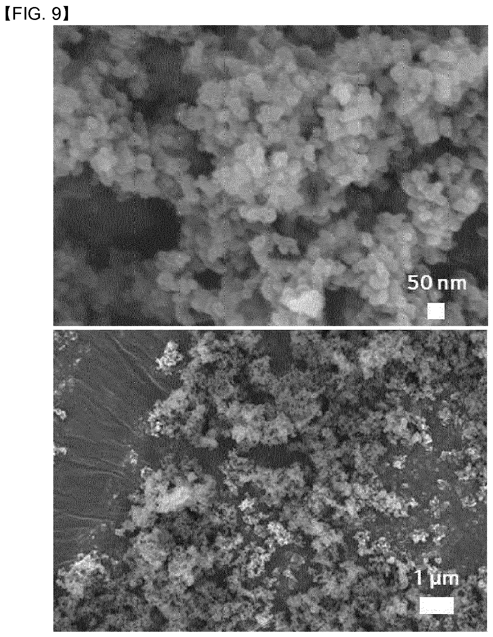

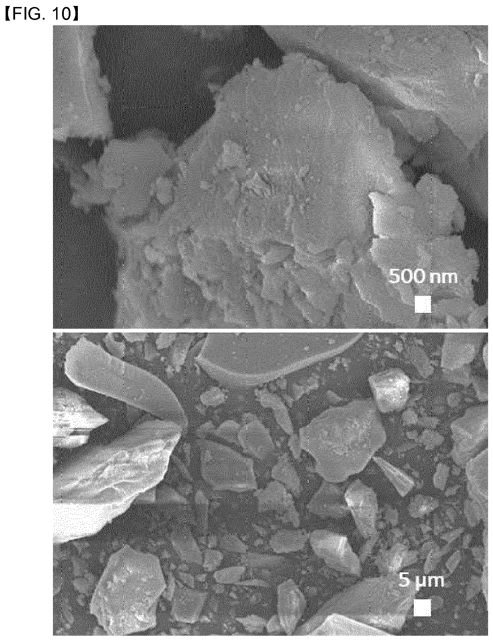

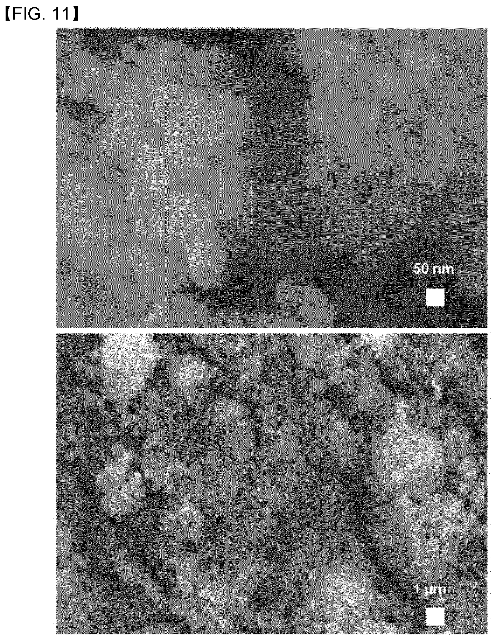

(1) An average primary particle diameter of the particles according to the examples and comparative examples was measured using scanning electron microscopy (SEM). The SEM images are shown in FIG. 1 to FIG. 11.
   In the measurement of the average primary particle diameter, the particle diameter means a Feret diameter and was calculated as an average of values obtained by measuring the particle diameters in various directions. Specifically, after obtaining a SEM image in which more than 100 particles were observed, a random straight line was plotted, and the primary particle diameter of the particles was calculated using the length of the straight line, the number of particles included on the straight line, and the magnification. The average primary particle diameter was determined by setting 20 or more of these straight lines.
(2) A nitrogen adsorption/desorption Brunauer-Emmett-Teller surface area (S_{BET}) and an external specific surface area (S_{EXT}) excluding micropores having a pore size of less than 2 nm were measured for each of the particles according to the examples and comparative examples using a specific surface area analyzer (BEL Japan Inc., BELSORP-MAX). Then, a volume of micropores (V_{micro}) having a pore size of less than 2 nm was calculated from the S_{BET} by a t-plot method.

In this measurement, the particles were pretreated by heating at 250 °C for 4 hours, and a temperature of an air oven mounted in the analyzer was maintained at 40 °C.

**[Table 3]**

| | Average primary particle diameter (nm) | S_{BET} (m²/g) | S_{EXT} (m²/g) | S_{EXT}/S_{BET} | V_{micro} (cm³/g) |
|---|---|---|---|---|---|
| Example 1 | 17.8 | 233.74 | 210.86 | 0.920 | 0.007 |
| Example 2 | 19.0 | 204.42 | 186.30 | 0.910 | 0.006 |
| Example 3 | 19.6 | 187.33 | 169.11 | 0.902 | 0.006 |
| Example 4 | 20.7 | 207.54 | 170.59 | 0.822 | 0.012 |
| Example 5 | 21.7 | 177.31 | 131.16 | 0.740 | 0.019 |
| Example 6 | 17.5 | 241.25 | 190.47 | 0.790 | 0.016 |
| Example 7 | 23.4 | 154.78 | 129.61 | 0.889 | 0.008 |
| Example 8 | 29.7 | 115.47 | 95.72 | 0.829 | 0.012 |
| Comparative Example 1 | 28.4 | 112.66 | 97.82 | 0.873 | 0.006 |
| Comparative Example 2 | 2216.0 | 32.40 | 29.30 | 0.904 | 0.006 |
| Comparative Example 3 | 15.9 | 287.39 | 231.58 | 0.806 | 0.014 |

Referring to Table 3, it was confirmed that Examples 1 to 8 can provide aluminosilicate nanoparticles having an average primary particle diameter of about 20 nm and excellent specific surface area without formation of aggregates.

In Comparative Example 2, it was confirmed that the particles formed very hard and large aggregates during the drying of the aluminosilicate salt.

### Experimental Example 5

0.1 g of the particles according to the examples and comparative examples were added to 10 ml of distilled water to prepare a solution containing 1 wt% of the particles. The solution was sonicated for 5 minutes at 90 % power in a 100 W pulsed ultrasonication device. Herein, the energy by the sonication acts as physical energy similar to mechanical force applied to the composition when the rubber composition is blended, so that a size distribution of the aggregates dispersed in the rubber composition can be indirectly confirmed.

The dispersed solution was subjected to sonication for an additional 2 minutes using a particle size analyzer (manufactured by HORIBA, model LA-960, laser diffraction type), and then a size distribution, a volume average particle diameter (Dₘₑₐₙ), a geometric standard deviation (std. dev.), and a cumulative particle diameter (D₁₀, D₅₀, D₉₀) of a volume distribution were measured for the aggregates of the above particles.

**[Table 4]**

| | Dₘₑₐₙ (*µ*m) | Std. Dev. (*µ*m) | D₁₀ (*µ*m) | D₅₀ (*µ*m) | D₉₀ (*µ*m) |
|---|---|---|---|---|---|
| Example 1 | 15.2 | 8.0 | 8.2 | 14.7 | 25.2 |
| Example 2 | 17.1 | 8.1 | 9.0 | 15.3 | 27.7 |
| Example 3 | 16.8 | 7.5 | 9.1 | 14.7 | 28.1 |
| Example 4 | 14.9 | 7.2 | 8.5 | 14.6 | 27.2 |
| Example 5 | 20.2 | 8.3 | 9.7 | 15.2 | 28.4 |
| Example 6 | 16.1 | 8.1 | 8.3 | 15.7 | 26.9 |
| Example 7 | 17.5 | 7.8 | 8.9 | 17.1 | 28.8 |
| Example 8 | 19.2 | 8.5 | 9.5 | 18.4 | 30.2 |
| Comparative Example 1 | 18.3 | 15.0 | 7.9 | 11.0 | 45.2 |
| Comparative Example 2 | 269.2 | 201.3 | 18.5 | 209.6 | 843.9 |
| Comparative Example 3 | 88.4 | 57.3 | 14.1 | 80.3 | 447.6 |

Referring to Table 4, it was confirmed that the secondary particles of the aluminosilicate nanoparticles according to Examples 1 to 8 exhibited a particle size distribution within a suitable range for use as a reinforcing material for rubber.

It was confirmed that the secondary particles of the aluminosilicate particles according to Comparative Examples 2 and 3 exhibited a particle size distribution in a range not suitable for use as a reinforcing material for rubber.

## Claims

1. A method for preparing aluminosilicate nanoparticles, comprising the steps of:
preparing a reaction solution containing an aluminosilicate salt by neutralizing an alkaline silicon source and an acidic aluminum source at a temperature of more than 70 °C and 95 °C or less so that a molar ratio (Si/Al) of silicon atoms (Si) in the silicon source to aluminum atoms (Al) in the aluminum source is 2.0 to 6.0;
washing the aluminosilicate salt to obtain aluminosilicate nanoparticles; and
drying the aluminosilicate nanoparticles.

2. The method for preparing aluminosilicate nanoparticles of Claim 1,
wherein the neutralization reaction is carried out at a temperature of 75 °C to 90 °C.

3. The method for preparing aluminosilicate nanoparticles of Claim 1,
wherein the silicon source is an alkaline solution with a pH of more than 7.0 including a water-soluble silicone salt.

4. The method for preparing aluminosilicate nanoparticles of Claim 3,
wherein the water-soluble silicone salt is at least one compound selected from the group consisting of sodium silicate and potassium silicate.

5. The method for preparing aluminosilicate nanoparticles of Claim 1,
wherein the aluminum source is an acidic solution with a pH of less than 7.0 including a water-soluble aluminum salt.

6. The method for preparing aluminosilicate nanoparticles of Claim 5,
wherein the water-soluble aluminum salt is at least one compound selected from the group consisting of aluminum chloride, aluminum nitrate, aluminum monoacetate, aluminum diacetate, aluminum triacetate, aluminum sulfate, and aluminum potassium sulfate.

7. The method for preparing aluminosilicate nanoparticles of Claim 1,
wherein the reaction solution has a concentration of hydrogen ions which obtains a pH of 4.0 to a pH of 10.0.

8. The method for preparing aluminosilicate nanoparticles of Claim 7,
wherein the reaction solution has a concentration of hydrogen ions which obtains a pH of 6.0 to a pH of 10.0.

9. The method for preparing aluminosilicate nanoparticles of Claim 1,
wherein the aluminosilicate nanoparticles are amorphous particles having a composition represented by the following Chemical Formula 1:
[Chemical Formula 1] [(MₓAl_{y}O_{2y})·(SiO₂)_{z}]·m(H₂O)
wherein, in Chemical Formula 1,
M is an element selected from the group consisting of Li, Na, K, Rb, Cs, Be, Fr, Ca, Zn, and Mg, or ions thereof;
x ≥ 0, y > 0, and m ≥ 0;
3.0 ≤ z/y ≤ 20.0; and
x/y < 1.2.

10. The method for preparing aluminosilicate nanoparticles of Claim 1,
wherein the aluminosilicate nanoparticles have an average primary particle diameter of 10 to 50 nm.

11. The method for preparing aluminosilicate nanoparticles of Claim 1,
wherein the aluminosilicate nanoparticles satisfy the following conditions: a full width at half maximum (FWHM) in a 2θ range of 20° to 37° is 3° to 8.5°, and a maximum peak intensity (Iₘₐₓ) is in a 2θ range of 24° to 31°, in a data plot obtained by X-ray diffraction (XRD).

12. The method for preparing aluminosilicate nanoparticles of Claim 1,
wherein the aluminosilicate nanoparticles have a Brunauer-Emmett-Teller surface area (S_{BET}) of 145 to 350 m²/g and an external specific surface area (S_{EXT}) of 120 to 300 m²/g according to an analysis of nitrogen adsorption/desorption, and satisfy 0.6 ≤ S_{EXT}/S_{BET} ≤ 1.0.

13. The method for preparing aluminosilicate nanoparticles of Claim 12,
wherein the aluminosilicate nanoparticles have a volume of micropores (V_{micro}) having a pore size of less than 2 nm calculated from the S_{BET} by a t-plot method of less than 0.05 cm³/g.

14. The method for preparing aluminosilicate nanoparticles of Claim 1,
wherein the aluminosilicate nanoparticles have a particle size distribution which shows a volume average particle diameter (Dₘₑₐₙ) of 1 to 25 *µ*m, a geometric standard deviation of 1 to 20 *µ*m, and a 90 % cumulative particle diameter (D₉₀) of 1 to 50 *µ*m, when measured using distilled water.
